# EUROPEAN PATENT SPECIFICATION

(11) **EP 0 920 469 B1**
(45) Date of publication and mention of the grant of the patent: **14.05.2003**
(21) Application number: 97936887.5
(22) Date of filing: 25.08.1997
(51) Int. Cl.: C08J 7/04, D06M 15/263, A61L 15/00, B32B 33/00, H01B 7/28

(54) **SUPPORT WITH SUPER-ABSORBENT MATERIAL, METHOD FOR THE PREPARATION THEREOF AND USE**
TRÄGER MIT SUPERABSORBIERENDEM MATERIAL, VERFAHREN ZU IHRER HERSTELLUNG UND VERWENDUNG
SUPPORT POURVU D'UNE MATIERE EXTREMEMENT ABSORBANTE, PROCEDE DE PREPARATION ASSOCIE ET UTILISATION

(30) Priority: 23.08.1996 NL 1003867; 20.09.1996 NL 1004087
(43) Date of publication of application: 09.06.1999
(73) Proprietor: Stockhausen GmbH & Co. KG, 47805 Krefeld (DE)
(72) Inventor: WEERKAMP, Louis, Leonard, NL-7546 ME Enschede (NL)
(74) Representative: Kutzenberger, Helga, Dr.
(86) International application number: PCT/NL97/00480
(87) International publication number: WO 98/007775

(56) References cited:
- WO-A-96/23024
- US-A- 3 615 972
- US-A- 4 006 273

## Description

The present invention relates to a support provided with a super-absorbent material, to a method for preparation thereof, a method for manufacturing the super-absorbent material, in addition to the use of the support in different products.

Such a super-absorbent material is described in WO96/23024 (= NL-A-1000572). With the "Swelling coating" described in this patent application is proven that a paste, which after drying and curing has super-absorbent properties, is applied most effectively (i. e. with the best absorbent properties) via a template application technique. Using this printing technique the islets of paste are applied such that after drying and curing they have a diameter of 200µ. A second advantage of application in this manner is that release of the coating is prevented. Because the used polymer is very hard, full surface coating is not possible therewith since after drying the coating as it were breaks off the substrate. Even after application of the coating in the form of islets, these will still sometimes "break off". A drawback to the application technique, and therefore the form of the coating, is that the application is limited. It is theoretically possible to apply a maximum such that the islets of 200µ are 200µ from each other and, if they are completely (semi-) spherical, are a maximum of 100µ high. Theoretically therefore, application will be a maximum of 70g/m². This application is however less because the applied coating contains 70% water and the dot therefore also shrinks. Nor is the applied dot ideally semi-spherical, whereby it is very difficult in practice to apply more than 50 g/m² (dry).

In the first instance a possibility was sought of making the coating softer so that after application it is no longer so hard that the coating "break off" at the slightest mechanical load.

Research has been carried out into two types of softener; a softener between the polymer and a softener which is "fixed" to the polymers. In addition to the first type of softener not being recommended in the case of a cable sheathing material (corrosion of the insulation), it has also been found not to work, the coating remained brittle.

The invention has for its object to obviate the above stated drawbacks and provides for this purpose a method which is distinguished in that expanded microspheres are added to the coating.

The present invention relates therefore to a support provided with super-absorbent material manufactured by causing suitable monomers to polymerize in the presence of a catalyst in order to obtain a polymer solution, adding a cross-linking agent to the polymer solution to obtain a pasty composition, subsequently applying the composition on or in a support and allowing the applied composition to dry and cross-link in order to obtain the support with the super-absorbent material, wherein gas filled microspheres were added to the paste.

It has been found that by adding expanded microspheres, not only did the coating become softer, but also that these microspheres had a positive effect on the so-called swelling speed (= absorption time).

These two properties discovered by chance now make possible full surface application of the paste on a number of substrates while still retaining the same absorption properties.

That the absorption properties become better can be explained by the fact that the coating layer becomes microporous due to the presence of the microspheres and the water transports rapidly through the coating.

It can be established experimentally that addition of 1-100%, preferably 10% microspheres makes the coating softer and swelling sheathing material can thereby be applied in full surface coating to the same substrates as described in the above stated patent application, whereby the application can also be increased (more than 50 g/m² dry).

As stated above the super-absorbent material provided to a support is described in WO 96/23024.

In this application "microspheres" are understood to mean small globules which are filled with gas. Through heating the gas expands and the globules increase in size. Microspheres are per se known and are used for different purposes, such as filler in inks etc.

A known type of microsphere, which is also particularly suitable for use in the invention, are microspheres of the brand and type Expancel™ 555E. The wall of microspheres generally consists of a polymer, like for instance polyvinylidenechloride (PVDC).

For use in the invention the microspheres may or may not be expanded. Expansion can take place prior to or during the production process of the coating.

## Claims

1. Support provided with super-absorbent material manufactured by causing suitable monomers to polymerize in the presence of a catalyst in order to obtain a polymer solution, adding a cross-linking agent to the polymer solution to obtain a pasty composition, subsequently applying the composition on or in a support and following the applied composition to dry and cross-link in order to obtain the support with the super-absorbent material, wherein gas filled microspheres were added to the paste.

2. Support as claimed in claim 1 provided with a full surface coating of the super-absorbent material as swelling sheathing material.

3. Support as claimed 1 or 2, **characterized in that** the microspheres were expanded at a determined moment prior to or during the production process of the coating.

## Patentansprüche

1. Träger, der mit superabsorbierendem Material versehen ist und hergestellt wird, indem geeignete Monomere in Gegenwart eines Katalysators zur Polymerisation gebracht werden, um eine Polymerlösung zu ergeben, die Polymerlösung mit einem Vernetzungsmittel versetzt wird, um eine pastöse Zusammensetzung zu ergeben, die Zusammensetzung anschließend auf einen Träger aufgetragen oder darin eingebracht und die aufgetragene bzw. eingebrachte Zusammensetzung danach getrocknet und vernetzt wird, um den Träger mit dem superabsorbierenden Material zu ergeben, wobei der Paste gasgefüllte Mikrokügelchen zugesetzt werden.

2. Träger nach Anspruch 1, versehen mit einer vollständigen Oberflächenbeschichtung aus superabsorbierendem Material als quellendes Hüllmaterial.

3. Träger nach Anspruch 1 oder 2, **dadurch gekennzeichnet, daß** die Mikrokügelchen zu einem bestimmten Zeitpunkt vor oder während des Herstellungsvorgangs der Beschichtung aufgeschäumt werden.

## Revendications

1. Support pourvu d'un matériau superabsorbant fabriqué par polymérisation de monomères adaptés en présence d'un catalyseur pour obtenir une solution de polymère, addition d'un agent de réticulation à la solution de polymère pour obtenir une composition pâteuse, puis application de la cette composition sur ou dans un support et séchage et réticulation de la composition appliquée pour obtenir le support avec le matériau superabsorbant, dans lequel des microsphères remplies de gaz sont ajoutées à la pâte.

2. Support selon la revendication 1, pourvu d'un revêtement sur toute la surface du matériau superabsorbant servant de matériau de revêtement gonflant.

3. Support selon la revendication 1 ou 2, **caractérisé en ce que** les microsphères ont été expansées à un moment déterminé avant ou pendant le procédé de fabrication du revêtement.
